# EUROPÄISCHE PATENTSCHRIFT

(11) **EP 1 354 508 B1**
(45) Veröffentlichungstag und Bekanntmachung des Hinweises auf die Patenterteilung: **06.06.2007**
(21) Anmeldenummer: 03101011.9
(22) Anmeldetag: 15.04.2003
(51) Int. Cl.: A01F 7/06

(54) **Axialabscheider mit Leitschiene**
Axial flow rotary separator with guide rail
Separateur axial avec rail de guidage

(30) Priorität: 19.04.2002 DE 10217466
(43) Veröffentlichungstag der Anmeldung: 22.10.2003
(73) Patentinhaber: DEERE & COMPANY, Moline, Illinois 61265-8098 (US)
(72) Erfinder: Braunhardt, Klaus, 66482, Zweibrücken (DE)
(74) Vertreter: Holst, Sönke

(56) Entgegenhaltungen:
- EP-A- 0 522 267
- FR-A- 1 543 147
- US-A- 4 611 605
- US-A- 5 387 153

## Beschreibung

Die Erfindung betrifft einen Axialabscheider mit einem Rotor innerhalb eines Gehäuses, das einen unteren Abscheiderost und im dem Abscheiderost zugeordneten Bereich der Länge des Rotors mindestens eine obere Deckplatte mit einer spiralförmigen Leitschiene umfasst, die eingerichtet ist, geerntetes Gut auf einer wendelförmigen Bahn zu führen.

Beispielsweise in der US 3 828 794 A oder in der FR 1 543 147 A ist ein Mähdrescher mit einem Axialabscheider dargestellt. Der Axialabscheider umfasst einen mit Gutbearbeitungselementen versehenen Rotor, der sich in der Fahrtrichtung des Mähdreschers erstreckt und innerhalb eines Gehäuses angeordnet ist. Am Boden des Gehäuses sind Roste angeordnet, durch die ausgedroschene Körner fallen und einer Reinigungseinrichtung zugeführt werden. An der Oberseite des Gehäuses sind spiralförmige Leitschienen angebracht, die dazu dienen, das Gut sukzessive nach hinten zu fördern.

Die Leitschienen erstrecken sich in Spiralform radial zur Achse des Rotors. Die optimale Steigung der Leitschienen, d. h. das Maß, um das ihr stromabwärtiges Ende jeweils gegenüber dem stromaufwärtigen Ende entgegen der Fahrtrichtung nach hinten versetzt ist (bzw. ihr Winkel zur Rotorachse), kann von der jeweils verarbeiteten Gutart abhängen. Bei Erntegut mit relativ kleinen Körnern, wie Weizen, ist es sinnvoll, den Leistungsbedarf des Axialabscheiders gering zu halten, was eine relativ große Steigung der Leitschienen bedingt, da das Gut dann schneller den Axialabscheider verlässt, so dass nur noch eine kleinere Gutmasse im Axialabscheider zu bewegen ist. Andererseits ist ein Ziel bei Erntegut mit recht großen Körnern, wie Erbsen und Mais, die so genannten Dribbelverluste gering zu halten. Sie entstehen, wenn die Körner gegen die Leitschienen stoßen und in Richtung auf die Rückseite der Axialtrennvorrichtung reflektiert werden, wo sie den Mähdrescher verlassen und verloren gehen. Um die Dribbelverluste gering zu halten, ist eine relativ geringe Steigung der Leitschienen sinnvoll. Es ist zwar möglich, die mit den Leitschienen besetzten Deckplatten zur Anpassung an die jeweils zu erntende Gutart auszutauschen, was jedoch sehr aufwändig ist.

Die US 5 387 153 A zeigt einen Mähdrescher mit einem Dresch- und Trennrotor, der in einem Gehäuse mit einem konischen Einzugsbereich angeordnet ist. Im konischen Einzugsbereich des Gehäuses, der nicht mit einem Rost ausgestattet ist, sind spiralförmige Leitschienen angebracht, die sich entlang der Oberflächennormalen des konischen Einzugsbereichs des Gehäuses erstrecken.

Die der Erfindung zugrunde liegende Aufgabe wird darin gesehen, einen verbesserten Mähdrescher mit einer Axialtrennvorrichtung bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, wenigstens einen Teil der in radialer Richtung des Rotors betrachteten Abmessung der Leitschiene (oder mehrerer bzw. aller Leitschienen einer Axialtrennvorrichtung) nicht radial zur Achse des Rotors zu orientieren, sondern seine Oberfläche im Winkel zur Radialen des Rotors anzuordnen. Prallen Körner auf die Oberfläche der erfindungsgemäßen Leitschiene, werden sie nicht genau nach hinten reflektiert, wo sie aus dem Ernteprozess verloren gehen, sondern werden nach unten oder oben abgelenkt, so dass sie gemeinsam mit dem Erntegut weitergefördert werden und durch das Abscheiderost zur Reinigungseinrichtung gelangen.

Auf diese Weise erreicht man insbesondere bei Erntegut mit recht großen Körnern eine Verminderung der Gutverluste. Es wird möglich, auch bei derartigem Erntegut Leitschienen mit relativ großer Steigung einzusetzen, so dass sich bei einer Änderung der geernteten Gutart ein Wechsel der Deckplatten zur Änderung der Steigung der Leitschienen erübrigt. Die erfindungsgemäßen Leitschienen können bei Axialtrennvorrichtungen eingesetzt werden, die einen Dreschabschnitt und einen Trennabschnitt aufweisen, wie auch bei Axialtrennvorrichtungen, denen eine konventionelle Dreschtrommel vorgeordnet ist und die nur einen Trennabschnitt umfassen.

Hinsichtlich der Ausrichtung der sich nicht radial zur Achse des Rotors erstreckenden Oberfläche der Leitschiene sind im Rahmen des erfindungsgemäßen Gedankens verschiedene Möglichkeiten denkbar. In einer Ausführungsform weist die Leitschiene einen sich nach vorn erstreckenden Abschnitt auf oder erstreckt sich über ihre ganze Höhe nach vorn. Von hinten auf diesen Abschnitt treffende Körner werden somit nach unten reflektiert. Andererseits kann die Leitschiene auch einen sich nach hinten erstreckenden Abschnitt aufweisen (oder sich insgesamt nach hinten erstrecken), von dem die Körner nach oben reflektiert werden. Sie treffen dann auf das Gehäuse der Axialtrennvorrichtung und werden von dort wieder nach unten reflektiert, so dass sie in den Gutstrom gelangen. Ein Vorteil der nach hinten abgewinkelten Leitschiene liegt darin, dass sich an ihrer Vorseite kein Gut ansammeln kann. Es wäre übrigens auch denkbar, Leitschienen mit dreieckigem Querschnitt zu verwenden, die als Hohlprofil oder massiv hergestellt sind. Diese Leitschienen können eine vordere, sich etwa radial erstreckende Oberfläche und eine hintere, sich schräg nach hinten erstreckende Oberfläche aufweisen. Eine Spitze des Dreiecks ist somit an der Deckplatte angebracht. Derartige Leitschienen haben den Vorteil, dass sie an ihrer Vorderseite das Gut aktiv führen und an ihrer Rückseite keine unerwünschten Dribbelverluste auftreten. Denkbar ist aber auch, die vordere Wand radial zur Rotorachse anzuordnen und die hintere Wand nach unten zu neigen. Man erhält ein auf der Spitze stehendes Dreieck.

Die nach vorn bzw. hinten abgewinkelten Abschnitte der Leitschienen können auch mit sich radial zur Achse des Rotors erstreckenden Abschnitten kombiniert werden.

In einer anderen Ausführungsform hat die Leitschiene einen etwa sinusförmigen Querschnitt.

In den Zeichnungen sind fünf nachfolgend näher beschriebene Ausführungsbeispiele der Erfindung dargestellt. Es zeigt:
- Fig. 1: einen Mähdrescher in Seitenansicht und schematischer Darstellung mit einer quer gelagerten Dreschtrommel und einem Axialabscheider mit einer Auswurftrommel,
- Fig. 2: eine perspektivische Ansicht des (an sich beispielsweise aus der EP 0 522 267 A bekannten) Axialabscheiders, an dem erfindungsgemäße Leitschienen Verwendung finden können,
- Fig. 3: einen Querschnitt durch eine erste Ausführungsform von Leitschienen für den Axialabscheider aus Figur 2,
- Fig. 4: einen Querschnitt durch eine zweite Ausführungsform von Leitschienen für den Axialabscheider aus Figur 2,
- Fig. 5: einen Querschnitt durch eine dritte Ausführungsform von Leitschienen für den Axialabscheider aus Figur 2,
- Fig. 6: einen Querschnitt durch eine vierte Ausführungsform von Leitschienen für den Axialabscheider aus Figur 2, und
- Fig. 7: einen Querschnitt durch eine fünfte Ausführungsform von Leitschienen für den Axialabscheider aus Figur 2.

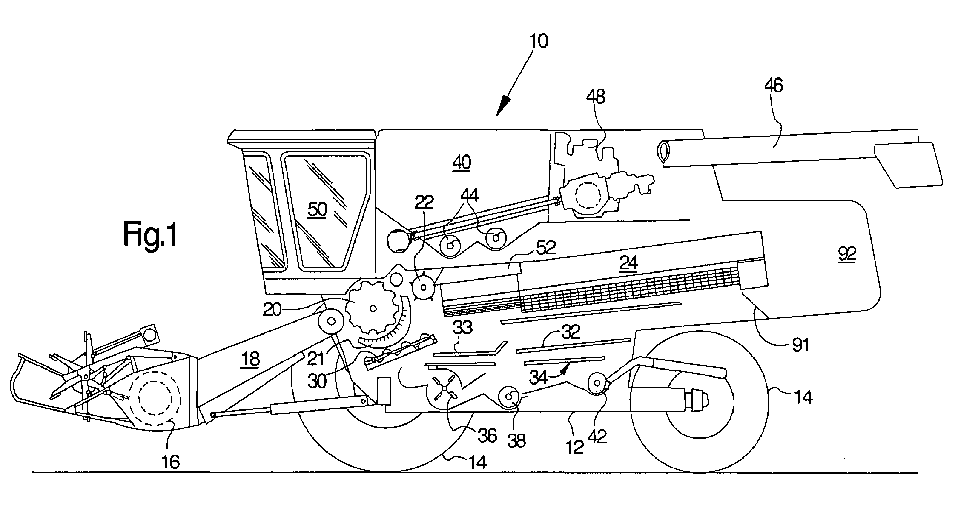

Die Figur 1 zeigt einen selbstfahrenden Mähdrescher 10 mit einem Tragrahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über ein Feld zu bewegen. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und Abscheidemitteln zuzuführen. Die Dresch- und Abscheidemittel umfassen eine quer angeordnete Dreschtrommel 20 und einen dieser zugeordneten Dreschkorb 21, denen das geerntete Gut zuerst zugeführt wird. Danach wird das Dreschgut einer Abstreifrolle 23 und einer Wendetrommel 22 zugeführt, von wo aus es in einen Axialabscheider 24 gelangt. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden.

Getreide und Spreu, die während des Dreschvorgangs abgeschieden werden, fallen auf wenigstens eine Schnecke 30, die beides einem Vorbereitungsboden 33 zuführt. Getreide und Spreu, die hingegen aus dem Axialabscheider 24 austreten, fallen auf einen Schüttelboden 32, der es zur Weitergabe auf den Vorbereitungsboden 33 führt. Der Vorbereitungsboden 33 gibt das Getreide und die Spreu an einen Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Schließlich wird das gereinigte Getreide aus dem Korntank 40 durch ein Entladesystem mit Querschnecken 44 und einem Entladeförderer 46 entladen.

All die vorgenannten verschiedenen Systeme werden mittels eines Verbrennungsmotors 48 angetrieben, der von einer Bedienungsperson aus einer Fahrerkabine 50 heraus bedient wird. Die verschiedenen Vorrichtungen zum Dreschen, Fördern, Reinigen und Abscheiden befinden sich innerhalb des Tragrahmens 12.

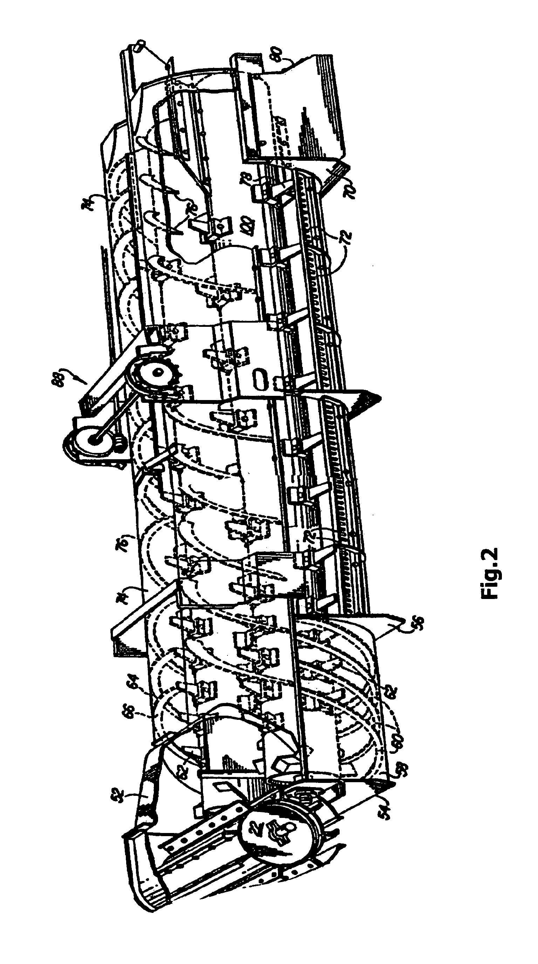

Die Ausgestaltung des Axialabscheiders 24 ist am Besten in der Figur 2 gezeigt. Die Zufuhrzone für beide Einheiten des Axialabscheiders erstreckt sich von einer vorderen Querplatte 54 bis zu einer rückwärtigen Querplatte 56 und ist mit einem geschlossenen Boden 58 versehen. Von dem geschlossenen Boden 58 erstrecken sich nach oben spiralförmige Leitschienen 60, die in unterbrochenen Linien dargestellt sind und das Dreschgut nach hinten in eine Abscheidezone bewegen. In der Zufuhrzone ist der Rotor mit starr befestigten Zinken bestückt, die kürzer sind als die Zinken 78, die sich in der Abscheidezone des Axialabscheiders 24 befinden. Ein Deckel 64 in der Zufuhrzone ist mit nach unten gerichteten Leitschienen 66 besetzt, die das Dreschgut innerhalb der Zufuhrzone nach hinten bewegen.

Die Abscheidezone erstreckt sich von der hinteren Querplatte 56 bis zu einer hinteren Querplatte 70. Der Bodenbereich jeder Einheit des Axialabscheiders 24 ist in der Abscheidezone mit einem Abscheiderost versehen, der sich aus Fingerrosten 72 und geschlossenen Platten zusammensetzt. Getreide und Spreu, die in der Abscheidezone aus dem Erntegut herausgetrennt werden, fallen durch die Fingerroste 72 auf den Schüttelboden 32. Obere Deckplatten 74 für die Abscheidezone sind mit sich nach innen erstreckenden spiralförmigen Gleitkufen oder Leitschienen 76 zum Bewegen des Materials nach hinten ausgerüstet. Da der Bodenbereich in der Abscheidezone nicht mit spiralförmigen Leitschienen 76 besetzt ist, sind die in der Abscheidezone am Rotor 100 starr befestigten Zinken 78 länger als die Zinken 62.

Eine Abgabezone erstreckt sich von der vierten Querplatte 70 bis zu einer rückwärtigen Querplatte 80. Der Boden jeder Einheit des Axialabscheiders 24 ist im Bereich der Abgabezone nach unten offen. Der Deckel über der Abgabezone ist eine Verlängerung der oberen Deckplatte 74 und ist ebenfalls mit spiralförmigen Leitschienen bestückt. Vom Axialabscheider 24 werden ausgedroschene Erntegutreste (Stroh) durch den nach unten offenen Bereich nach unten ausgeworfen. Durch die Wirkung der Schwerkraft fallen die Erntegutreste auf ein Strohleitblech 91 und verlassen den Mähdrescher 10 durch eine Öffnung im Boden der Ausfallhaube 92 nach unten und werden als Schwad auf dem Feld abgelegt.

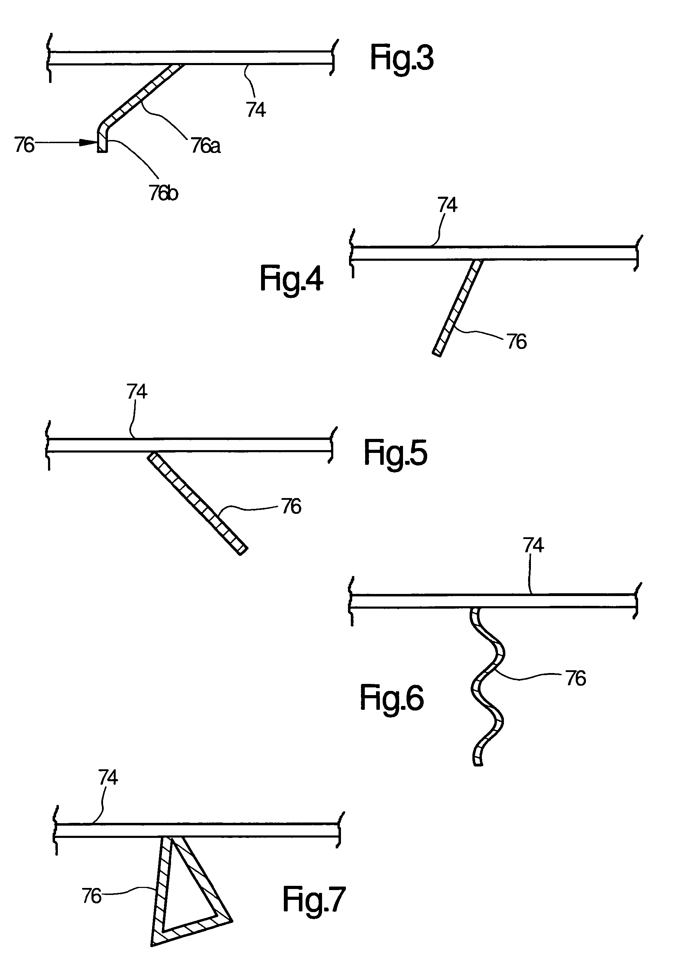

In der Figur 3 ist ein vertikaler, entlang der Längsachse des Axialabscheiders 24 aufgenommener Querschnitt durch eine erste erfindungsgemäße Ausführungsform der Leitschienen 76 dargestellt. Die Leitschienen 76 sind nicht radial zur Achse des Rotors 100 angeordnet, was anhand der wesentlich kleineren Darstellung in Figur 2 nicht erkennbar ist, sondern im Winkel dazu. Die Leitschienen gemäß der Figur 3 weisen einen oberen Abschnitt 76a auf, der sich von der Deckplatte 74 unter einem Winkel von etwa 45° nach unten und entgegen der Gutflussrichtung nach vorn erstreckt. Der obere Abschnitt 76a geht in einen unteren Abschnitt 76b über, der sich etwa vertikal nach unten erstreckt.

Die zweite Ausführungsform der Leitschienen 76 gemäß Figur 4 weist nur einen einzigen Abschnitt auf, der sich von der Deckplatte 74 unter einem Winkel von etwa 45° schräg nach unten und entgegen der Gutflussrichtung nach vorn erstreckt.

Die dritte Ausführungsform der Leitschienen 76 gemäß Figur 5 weist nur einen einzigen Abschnitt auf, der sich von der Deckplatte 74 unter einem Winkel von etwa 45° schräg nach unten und in der Gutflussrichtung nach hinten erstreckt.

Die Figur 6 stellt eine vierte Ausführungsform der Leitschienen 76 dar. Die Leitschienen 76 erstrecken sich von der Deckplatte 74 schlangenförmig, d.h. näherungsweise in der Form einer Sinuskurve nach unten.

In der Figur 7 ist ein Querschnitt durch eine fünfte Ausführungsform der Leitschienen 76 wiedergegeben. Die Leitschiene 76 ist ein dreieckiges Hohlprofil. Eine vordere Wand des Hohlprofils erstreckt sich von der Deckplatte 74 etwa radial zur Achse des Rotors 100 nach unten. Eine hintere Wand des Hohlprofils erstreckt sich etwa wie die Leitschiene 76 der Figur 5. Die beiden Wände sind durch eine dritte, untere Wand untereinander verbunden, die sich von der Unterkante der vorderen Wand schräg nach hinten und oben bis zur Unterkante der hinteren Wand erstreckt.

Die in den Figuren 3 bis 7 dargestellten Leitschienen 76 erstrecken sich spiralförmig an der Oberseite der Deckplatten 74, wie in der Figur 2 dargestellt. Ihr Querschnitt ist vorzugsweise über ihre Länge konstant, obwohl es auch möglich wäre, ihn über ihre Länge variieren zu lassen. So könnten sich die Leitschienen 76 am linken und rechten Ende, d.h. vom Abscheiderost ausgehend, zunächst radial zur Achse des Rotors 100 erstrecken, und kontinuierlich in den nicht-radial orientierten Querschnitt übergehen, wie er in den Figuren 3 bis 6 dargestellt ist. Die erfindungsgemäßen Leitschienen 76 können auch in der Zufuhrzone anstelle der radial zur Achse des Rotors 100 orientierten Leitschienen 60 treten. Es wäre auch denkbar, in einem Mähdrescher 10 Leitschienen 76 unterschiedlichen Querschnitts über die Länge des Rotors 100 zu verteilen. So können eine oder mehrere Arten der Leitschienen 76 gemäß den Figuren 3 bis 7 und/oder gemischt mit radial orientierten Leitschienen über die Länge der Rotoren 100 verteilt werden.

## Patentansprüche

1. Axialabscheider (24) mit einem Rotor (100) innerhalb eines Gehäuses, das einen unteren Abscheiderost und im dem Abscheiderost zugeordneten Bereich der Länge des Rotors (100) mindestens eine obere Deckplatte (74) mit einer spiralförmigen Leitschiene (76) umfasst, die eingerichtet ist, geerntetes Gut auf einer wendelförmigen Bahn zu führen, **dadurch gekennzeichnet, dass** ein Abschnitt der Leitschiene (76) eine nicht radial zur Achse des Rotors (100) angeordnete Oberfläche aufweist, so dass diese Oberfläche mit dem Radius des Rotors (100) einen Winkel einschließt.

2. Axialabscheider (24) nach Anspruch 1, **dadurch gekennzeichnet, dass** die Leitschiene (76) einen Abschnitt (76a) aufweist, der sich von der Deckplatte (74) entgegen der Gutflussrichtung schräg nach vorn erstreckt.

3. Axialabscheider (24) nach Anspruch 1 oder 2, **dadurch gekennzeichnet, dass** die Leitschiene (76) einen Abschnitt aufweist, der sich von der Deckplatte (74) in der Gutflussrichtung schräg nach hinten erstreckt.

4. Axialabscheider (24) nach einem der Ansprüche 1 bis 3, **dadurch gekennzeichnet, dass** die Leitschiene (76) einen vorzugsweise dem Rotor (100) benachbarten Abschnitt (76b) aufweist, der sich parallel zum Radius des Rotors (100) erstreckt.

5. Axialabscheider (24) nach einem der Ansprüche 1 bis 4, **dadurch gekennzeichnet, dass** die Leitschiene (76) einen etwa sinusförmigen Querschnitt aufweist.

## Claims

1. An axial separator (24) with a rotor (100) within a housing which comprises a lower separator grating and at least one upper cover plate (74) with a spiral guide rail (76) in the region of the length of the rotor (100) associated with the separator grating, which guide rail is arranged to guide harvested crop on a helical path, **characterized in that** a section of the guide rail (76) has a surface which is not arranged radially to the axis of the rotor (100), so that this surface includes an angle with the radius of the rotor (100).

2. An axial separator (24) according to claim 1, **characterized in that** the guide rail (76) has a section (76a) which extends obliquely forward from the cover plate (74) against the crop flow direction.

3. An axial separator (24) according to claim 1 or 2, **characterized in that** the guide rail (76) has a section which extends obliquely to the rear from the cover plate (74) in the crop flow direction.

4. An axial separator (24) according to any of claims 1 to 3, **characterized in that** the guide rail (76) has a section (76b), preferably adjacent the rotor (100), which extends parallel to the radius of the rotor (100).

5. An axial separator (24) according to any of claims 1 to 4, **characterized in that** the guide rail (76) has a somewhat sinusoidal cross-section.

## Revendications

1. Séparateur axial (24) avec un rotor (100) à l'intérieur d'un corps, qui comprend une grille de séparation inférieure et, dans la zone de la longueur du rotor (100) affectée à la grille de séparation, au moins une plaque de couverture supérieure (74) avec un rail de guidage (76) en forme de spirale, qui est destiné à conduire la récolte sur une voie hélicoïdale, **caractérisé en ce qu'**une section du rail de guidage (76) présente une surface qui n'est pas disposée radialement par rapport à l'axe du rotor (100), de sorte que cette surface forme un angle avec le rayon du rotor (100).

2. Séparateur axial (24) suivant la revendication 1, **caractérisé en ce que** le rail de guidage (76) présente une partie (76a) qui s'étend en oblique vers l'avant en s'écartant de la plaque de couverture (74) en sens opposé de l'écoulement de la récolte.

3. Séparateur axial (24) suivant la revendication 1 ou 2, **caractérisé en ce que** le rail de guidage (76) présente une partie qui s'étend en oblique vers l'arrière en s'écartant de la plaque de couverture (74) dans le sens de l'écoulement de la récolte.

4. Séparateur axial (24) suivant l'une des revendications 1 à 3, **caractérisé en ce que** le rail de guidage (76) présente une partie (76b) de préférence adjacente au rotor (100) qui s'étend parallèlement au rayon du rotor (100).

5. Séparateur axial (24) suivant l'une des revendications 1 à 4, **caractérisé en ce que** le rail de guidage (76) présente une section transversale de forme environ sinusoïdale.
